# EUROPEAN PATENT SPECIFICATION

(11) **EP 3 464 886 B1**
(45) Date of publication and mention of the grant of the patent: **17.08.2022**
(21) Application number: 17809770.5
(22) Date of filing: 30.05.2017
(51) Int. Cl.: F03D 7/00, F03D 80/00, F03D 80/50, F03D 80/70

(54) **WIND TURBINE WITH A ROTOR LOCKING SYSTEM AND A METHOD THEREOF**
WINDTURBINE MIT EINEM ROTORVERRIEGELUNGSSYSTEM UND VERFAHREN DAFÜR
ÉOLIENNE AVEC UN SYSTÈME DE VERROUILLAGE DU ROTOR ET SON PROCÉDÉ

(30) Priority: 07.06.2016 DK 201670408
(43) Date of publication of application: 10.04.2019
(73) Proprietor: Envision Energy (Denmark) ApS, 8600 Silkeborg (DK)
(72) Inventor: NIELSEN, Thomas Krag, 8382 Hinnerup (DK)
(74) Representative: Patrade A/S
(86) International application number: PCT/DK2017/050175
(87) International publication number: WO 2017/211366

(56) References cited:
- EP-A1- 2 565 441
- EP-A2- 1 167 755
- EP-A2- 1 167 755
- EP-B1- 1 167 755
- WO-A2-2010/102967
- DE-A1-102010 020 355
- DK-B1- 178 152
- DK-B1- 178 152
- US-A1- 2011 132 119
- US-A1- 2011 135 481
- US-A1- 2011 135 481
- US-A1- 2015 260 164

## Description

### Field of the Invention

The present invention relates to a wind turbine comprising a rotor locking system with a plurality of locking segments configured to be arranged between the hub and the mainframe. Each locking segment has at least one, preferably two, first lock elements arranged between two first support areas on a first end surface. Each locking segment further has at least one second lock element arranged between two second support areas on a second end surface.

The present invention also relates to a method of operating a wind turbine with a rotor locking system where the rotation of the rotor is stopped and at least one locking segment is inserted into a gap between the mainframe and the hub. When inserted, first lock elements on the locking segment engage complementary first lock elements on the mainframe while second lock elements engage complementary second lock elements on the hub.

### Background of the Invention

It is well known that modern wind turbines comprise a braking or locking system for braking and, optionally, locking the rotor, i.e. hub with wind turbine blades mounted thereto. This braking or locking system is used in a specific position during repair work, emergency situations or other situations where there is a need for securing the rotor in a parked position.

Some types of wind turbines comprise a gearbox configured to transform the rather slow rotation of the rotor into a faster rotation of a rotor located in the generator. Such wind turbines often comprise a braking system arranged between the gearbox and the generator, whereby reducing the torque required to brake the rotating shaft. Other wind turbines have the braking system arranged in front of the gearbox and, thus, have to deal with a higher torque, but then with less revolutions per minute. On direct drive wind turbines there is no gearbox as the wind turbine rotor is directly coupled to the generator rotor via a main rotor shaft.

In the above-mentioned solutions where the braking system is arranged relative to the rotor shaft, the rotor shaft has to be sufficiently stiff and rigid in order to take up the forces acting on the rotor shaft during braking and locking. Modern rotors today can have a diameter of 100 metres or more and a weight of up to 50 metric tons or more. Furthermore, the generator, including its rotor, also has a large mass of up to 20 metric tons. Such large masses generate a large moment of inertia under rotation and, thus, require a large amount of torque in order to simply slow down as well as coming to a complete stop. Such large masses also require a large amount of forces to lock these large masses in a rotational position due to the aerodynamic forces on the rotor. Known braking systems require rigid and massive steel shafts having a high weight in order to be rigid and stiff enough to have an acceptable low elasticity.

If the drive train, comprising the hub, the rotor shaft and the generator, has any slack or a too large elasticity, the drive train will wear down too fast and eventually break. This would lead to prolonged downtime and increased repair time and costs.

It is known to use a plurality of conical shaped locking mandrels which are operated by a hydraulic system to engage complementary shaped conical holes to lock the rotor in a rotational position. The locking mandrels and complementary holes extend in a radial or axial direction and, thus, enabling the locking mandrels to be moved in the radial or axial direction. In the above-mentioned solutions, the hub or the rotor shaft is outfitted with a disc shaped flange on which the holes are arranged and the locking mandrels and the operating system thereof are arranged on a mainframe of the nacelle. One disadvantage is that it is only possible to lock the rotor in as many different positions as defined by the number of holes. Another disadvantage is that the locking mandrels have a tendency to get stuck in the holes and, thus, preventing the rotor from becoming unlocked.

Such a solution is disclosed in WO 2010/102967 A1 where a moveable locking pin is moved from the exterior in a radial direction into engagement with an opening in a flange part of the hub. This locks the rotor in a rotational position.

US 2011/013548 A1 discloses a locking system where a moveable locking pin is moved from the interior of the mainframe in an axial direction into engagement with an opening in a disk shaped flange mounted to the rotor shaft. This locks the rotor in a rotational position.

DK 178152 B1 discloses another locking system in which the rotor is locked in a rotational position by means of a plurality of locking segments. The locking segments are positioned in a gap formed between the mainframe of the nacelle and a rigid plate mounted to the rotor shaft. The locking segment comprises a set of first teeth for engaging complementary teeth on the mainframe and a set of second teeth for engaging complementary teeth on the rigid plate. Each locking segment is installed in the axial direction and is held in place by the forces acting on the respective segment, the locking segment may be forced out due to the rotational movement of the rotor. The rigid plate is placed inside the mainframe which makes it difficult to install the locking segments due to the confined space. Further, this solution requires the inner surface of the mainframe facing the gap to be machined in order to form the teeth which is an expensive process and could cause a notch effect in these teeth during use.

On the above-mentioned locking segments the first and second teeth are distributed over the entire length where the outermost tooth in either rotational direction is situated almost at the peripheral edge. During rotation, the rotor and, thus, the rigid plate will act on one side of the outermost second tooth, thereby causing the respective segment to tilt in the rotational direction. This, in turn, causes increased stress and wear on that tooth as well as in the opposite facing outermost first tooth contacting the mainframe, leading to a potential failure of the locking segment.

### Object of the Invention

An object of the invention is to provide a wind turbine locking system that solves the above-mentioned problems.

Another object of the invention is to provide a wind turbine locking system that requires less machining of the mainframe.

Yet another object of the invention is to provide a wind turbine locking system that reduces the stresses and wear in the locking segments.

A further object of the invention is also to provide a method of operating a wind turbine locking system that allows for easy and simple installation of the locking segments.

### Description of the Invention

As mentioned earlier, an object of the invention is achieved by a wind turbine comprising:
- a rotor arranged relative to a nacelle, the rotor comprises at least two wind turbine blades mounted to a rotatable hub, the hub is configured to be mounted to a rotor shaft,
- the nacelle being arranged on top of a wind turbine tower, the nacelle comprising a mainframe configured to be rotatably coupled to the hub at a mounting interface,
- the mounting interface comprises a first bearing part and a second bearing part configured to rotate relative to the first bearing part, wherein one of the first and second bearing parts is connected to the hub and the other of the first and second bearing parts is connected to the mainframe for transferring loads from the rotor to the mainframe,
- a locking system comprising at least one locking segment, the at least one locking segment having a length in a rotational direction, a height in a radial direction, and a width in an axial direction, wherein the at least one locking segment comprises at least one first lock element arranged on a first surface and at least one second lock element arranged on an opposite facing second surface, each of said first and second lock elements has a length, a height and a width, wherein each first lock element is configured to engage a complementary first lock element on the mainframe, and each second lock element is configured to engage a complementary second lock element on the hub, characterised in that, at least a first support area is arranged on the first surface, the first support area being located at a peripheral edge of the at least one locking segment, wherein the first support area has a length which corresponds to at least twice the length of the at least one first lock element.

This provides an improved wind turbine locking system that enables the wind turbine rotor to be locked in a selected rotational position in a simple and easy manner. The locking segments define, along with the complementary locking elements, a multiple of different rotational positions in which the rotor can be locked. The present locking system enables the rotor to be locked with a minimum of angular movement, which is preferred in situations where only a limited rotation is wanted, e.g. in servicing or repair situations or after braking the rotor to a complete stop.

The wind turbine may be of the fixed speed type or the variable speed type where a pitch bearing unit is arranged at the interface between the blade root and the hub or between two blade sections. A pitching motor is arranged at the pitch bearing unit and coupled to a pitch control system. The dimensions and size of the locking system, e.g. the locking segments, the lock elements and the complementary lock elements, may be selected according to the desired configuration and rating of the wind turbine. The locking system can thus be used in different types of wind turbines and be adapted to a particular configuration of the hub and mainframe and, optionally, the drivetrain located in the nacelle.

The mainframe structure may form an axial opening facing a corresponding axial opening in the hub where the mainframe structure extends partly or fully around this axial opening to form an interior spacing. The rotor shaft may extend through these axial openings and may be connected to the hub via a mounting flange located at the front end of the hub. The rotor shaft may thus be configured as a torque transferring shaft allowing rotational torque to be transferred to the generator, e.g. via a gearbox unit. The hub may further be rotatably connected to the mainframe via a mounting interface comprising one or more bearing units having at least two bearing parts capable of rotating relative to each other. The bearing unit may be a single or double bearing unit configured to transfer all loads due to the wind and the weight of the hub to the mainframe. The present locking system can suitably be used in wind turbines using moment bearings and a rotor shaft for transferring only rotational torque to the generator or gearbox unit. The term "moment bearing" is well known within the technical field and will not be described in further details.

The mounting interface may be situated at the above-mentioned axial openings where a first bearing part may be connected to the mainframe and a second part may be connected to the hub. This enables the hub to be supported by the mainframe via a rigid connection. The mounting interface may alternatively be situated between the hub and a rotor beam extending into the hub through the above-mentioned axial opening. The rotor beam may be rigidly connected to the mainframe at the above-mentioned axial opening. The first bearing part may be connected to the rotor beam and a second part may be connected to the hub. This enables the hub to be supported by the mainframe via another rigid connection.

Alternatively, the bearing units may be arranged within the nacelle where the first bearing part may be connected to the mainframe and the second mainframe may be connected to the rotor shaft. The rotor shaft may further comprise a mounting flange mounted to a mounting flange located at the axial opening of the hub. The hub may thus be free to rotate relative to the mainframe. In this configuration, the rotor shaft may be configured as a rigid shaft transferring both the rotational torque to the generator or gearbox unit and the bending loads to the mainframe via the bearing units. The present locking system can suitably also be used in wind turbines using main bearings and a stiff and rigid rotor shaft. The term "main bearing" is well known within the technical field and will not be described in further details.

According to one embodiment, at least a second support area is arranged on the second surface, the second support area being located at a peripheral edge of the at least one locking segment, wherein the second support area has a length which at least corresponds to the length of said first support area.

The present locking system comprises at least one locking segment configured to be arranged between the mainframe and the hub which can suitably be accessed from the exterior of the mainframe as well as the exterior of the hub. The complementary lock elements configured to engage the lock elements on the locking segment are thus located on the exterior of the mainframe and the hub. This, in turn, makes it easier and faster for a worker to insert and remove the respective locking segments as described later.

The locking system may comprise a plurality of locking segments which can be arranged in individual series along the circumference of the hub or mainframe or distributed individually along the circumference. Each of these series may comprise at least two locking segments. The complementary lock elements on the mainframe and/or the hub are arranged along the circumference and may be distributed evenly along the circumference or in individual series. Each of these series may comprise at least two or even just one complementary lock element depending on the shape and dimensions of the respective lock elements. This enables the locking forces, generated due to the rotational position of the rotor and the wind acting on the rotor, to be distributed over a number of locking segments and, thus, reducing the loads on each of the locking segments.

When inserted in the axial direction, each locking segment has a length measured in the rotational direction, a width measured in the axial direction, and a height measured in the radial direction. When inserted in the radial direction, the width is measured in the radial direction and the height is measured in the axial direction. The locking segment has two opposite facing side surfaces defining the width. The locking segment further has two opposite end surfaces defining a minimum height. The first lock elements are arranged on a first end surface while the second lock elements are arranged on a second end surface. The first and second lock elements extend substantially between the two side surfaces.

The outermost first lock element is retracted from the peripheral edge of the first end surface in the rotational direction, thus forming a first support area. Likewise, the outermost second lock element is retracted from the peripheral edge of the second end surface in the rotational direction, thus forming a second support area. These support areas define a support arm having a relative length at least twice the length of the first or second lock element. The lock elements are thus located closer towards to the centre of the locking segment which, in turn, reduces the moment arm and, thus, a more optimal transfer of forces. During the tilt, the first support area opposite of the rotational direction will contact an opposite facing surface in which the complementary first lock elements are arranged. Further during the tilt, the second support area in the rotational direction will contact an opposite facing surface in which the complementary second lock elements are arranged. This counteracts the tilting of the locking segment and distributes the forces more evenly over each of the first lock elements.

This differs from the locking segments of DK 178152 B1 which clearly has a very small support arm where its relative length is less than the length of the projecting teeth. This results in a long moment arm where forces during the tilt are concentrated at the front teeth on the first end surface in rotational direction and at the rear teeth on the second end surface in rotational direction.

According to one embodiment, at least one of the first and second surfaces has two first or second support areas arranged at opposite facing peripheral edges, wherein said first or second lock elements are located between said two first or second support areas.

The present locking segment may have a first support area and a second support area at both peripheral edges in the rotational direction. The first and second lock elements may thus be arranged between these first and second support areas. The locking segment may be configured to prevent rotation of the rotor in mainly one direction. Alternatively, the locking segments may be configured to prevent rotation in both clockwise and anti-clockwise direction. This allows the locking segment to be inserted regardless of which side surface is facing away from the mainframe or hub.

According to one embodiment, the at least one second lock element has at least a length that is greater than the at least one first lock element.

By increasing the length of the respective support areas, the number of the first and/or second lock elements on the first and/or second end surfaces may be reduced compared with the locking segment of DK 178152 B1. This also reduces the amount of machining required to form the lock element or simplifies the casting process of the mainframe or hub if the lock elements are integrated into the mainframe or hub.

When inserted in the axial direction, each lock element has a length measured in the rotational direction, a width measured in the axial direction, and a height measured in the radial direction. When inserted in the radial direction, the width is measured in the radial direction and the height is measured in the axial direction. Each lock element extends one side surface of the locking segment to the other side surface. The number of first lock elements may be equal to or greater than the number of second lock elements, or vice versa. The pitch and the respective lengths may be measured along a base circle defined by the first and second end surfaces or along a pitch circle defined by the first and second lock elements.

In example, but not limited to, at least two first lock elements may be arranged on the first end surface with a space between the individual first lock elements. Further, at least one second lock element may be arranged on the second end surface. By increasing the support areas and, thus, placing the first lock elements closer to the centre of the locking segment, the moment arm can be reduced and the forces can be more evenly distributed over the first lock elements during tilt.

The length of the first support area may correspond to at least the sum of lengths of the first lock elements or at least the pitch between two successive first lock elements. The length of space between two successive first lock elements may correspond to the length of one or both first lock elements. The two first support areas located on the first end surface may have the same or different lengths. The height between the opposite first and second support areas may be equal to or less than the length of the first support area. This allows for an optimal transfer of forces and distribution of stresses in the locking segment.

The length of the second lock element may correspond to at least twice the length of one first lock element. The second lock element may alternatively, but not limited to, have a length that corresponds to the sum of the pitch between two successive first lock elements and the length of one first lock element. The two second support areas located on the second end surface may have the same length as the opposite facing first support areas. Alternatively, the length of one or both second support areas may differ from the length of one or both first support areas. This adds structural strength to each second lock element and allows it to absorb moment forces during tilt.

The transition areas (fillet) between the first or second end surface and the respective first or second lock element may be shaped to prevent the formation of notch effect in that area. This transition area may form a smooth transition, e.g. a rounded or triangular edge.

According to one embodiment, the mainframe or the mounting interface comprises a first outer surface axially facing the hub, where a first flange is connected to the first outer surface, and said complementary first lock elements are arranged on an inner surface of the first flange.

The complementary first lock elements may be arranged on a separate flange, i.e. first flange, facing the hub. The flange may be shaped as a ring element, e.g. an outer ring, configured to be mounted to an axial outer surface of the mainframe or of the first bearing part. The complementary first lock elements may be located on an inner end surface of the flange. This allows the complementary first lock elements to be formed separately from the mainframe and, thus, eliminates the need for machining the outer surface of mainframe. This, in turn, reduces the manufacturing costs of the mainframe.

The flange may be configured to add extra stiffness to the bearing unit and to the mounting interface. This in turn reduces the relative movement occurring in the mainframe during rotation of the rotor. The flange may optionally have one or more holes enabling an external lubrication system to be coupled to the bearing unit for lubrication of the bearing parts.

According to one embodiment, the hub comprises a second outer surface, where a second flange is connected to the second outer surface, where said complementary second lock elements are integrated in an outer surface of the second flange.

The complementary second lock elements may be arranged on a separate flange, i.e. a second flange, facing the mainframe. This flange may be shaped as a ring element, e.g. an inner ring, configured to be mounted to an axial outer surface of the hub or of the second bearing part. Alternatively, the flange may be mounted to an axial inner surface of the second bearing part. This flange may be configured to add extra stiffness to the bearing unit and to the mounting interface. The flange may also be configured to act as a mounting interface for the rotor shaft. Mounting elements, e.g. mounting holes, for mounting the rotor shaft may be arranged at or near an inner end of the flange. This allows for the use of a shorter rotor shaft compared to other wind turbines were the rotor shaft is mounted to a mounting flange at the front of the hub.

The complementary second lock elements may be located on an outer end surface of the flange. This allows the complementary second lock elements to be formed separately from the hub and, thus, eliminates the need for machining the outer surface of hub. This, in turn, reduces the manufacturing costs of the hub.

The flange may alternative be configured to be mounted to a radial outer surface of the hub. The hub may thus be mounted directly to the second bearing part and the flange may be positioned relative to a radial outer surface of the hub. This also allows the complementary second lock elements to be formed separately from the hub and, thus, eliminates the need for machining the outer surface of hub. This also enables the complementary second lock elements to be replaced by simply replacing the old flange with a new flange.

The above-mentioned two flanges, e.g. the first and second flanges, may comprise a plurality of mounting elements, e.g. mounting holes, for mounting the respective flange to the hub, the mainframe, the first bearing part, or the second bearing part.

According to one embodiment, at least the first complementary lock elements are integrated into a first outer surface on the mainframe or the second complementary lock elements are integrated into a second outer surface on the hub.

The complementary first lock elements may alternatively be formed as an integrated part of the mainframe. The complementary first lock elements may be formed by machining the respective outer surface of the mainframe. The complementary first lock elements may also be formed during the casting process by means of inverted impressions in the mould. This allows for an easier and cheaper manufacturing process compared to the manufacturing process required to form the teeth in DK 178152 B1.

The complementary second lock elements may alternatively be formed as an integrated part of the hub. The complementary second lock elements may be formed by machining the respective outer surface of the hub. The complementary second lock elements may also be formed during the casting process by means of inverted impressions in the mould. This allows for an easier and cheaper manufacturing process due to the reduced number of complementary second lock elements compared to DK 178152 B1.

The first and second complementary lock elements may be positioned in the radial plane so that the locking segment is inserted and removed in the axial direction. Alternatively, the first and second complementary lock elements may be positioned in the axial plane so that the locking segment is inserted and removed in the radial direction. This enables the configuration and positioning of the locking system to be adapted to the particular configuration and shape of the mainframe and hub. The locking system may thus be suitably positioned to allow easy access to the locking segments from the exterior of the mainframe and hub. The locking system of DK 178152 B1 is only accessible from the interior of the mainframe, thus requiring the worker to enter the mainframe structure in order to insert or remove the locking segments.

According to one embodiment, at least one of said first or second lock elements or said first or second complementary lock elements has a conical shape in at least the width direction.

The first lock element and/or the complementary first lock element may have a cross sectional profile where the height or width tapers from one side surface towards the other side surface. Alternatively, both the height and width may taper from one side surface towards the other side surface. This enables the first lock element and/or the complementary first lock element to have a conical shape and, thus, act as a wedge. This allows for an easier insertion of the locking segment as the conical shape is able to compensate for any small misalignment between the respective parts.

Alternatively or additionally, the second lock element and/or the complementary second lock element may have a cross sectional profile where the height or width tapers from one side surface towards the other side surface. Alternatively, both the height and width may taper from one side surface towards the other side surface. This enables the second lock element and/or the complementary second lock element to have a conical shape and thus act as a wedge. This also allows for an easier insertion of the locking segment as the conical shape is able to compensate for any small misalignment between the respective parts.

In example, but not limited to, all locking segments may have a conical profile as described above or only some of the locking segments have such a conical profile while the other locking segments have non-tapered profile, e.g. a rectangular profile.

In another example, but not limited to, all complementary first lock elements and/or complementary second lock elements may have a conical profile as described above or only some of these lock elements have such a conical profile while the other lock elements have non-tapered profile, e.g. a rectangular profile.

According to one embodiment, the at least one locking segment has at least one fixation element configured to secure the at least one locking segment to an endstop.

The locking segment may comprise means for fixating it relative to the mainframe and/or hub. These means may in example, but not limited to, include a fastener, a bracket, a mounting hole for receiving a bolt or screw, or other suitable fastening means. This allows the locking segments to be held in place when the rotor is locked in a rotational position.

In example, but not limited to, the locking segment may be connected to an endstop via suitable mounting elements. The mainframe or hub may define the endstop. Alternatively, the above-mentioned first or second flange may further comprise a projecting rim or teeth facing the outer surface of the mainframe or bearing unit. The complementary first or second lock elements may be located at the opposite so that this projecting rim or teeth acts as the endstop for the locking segment. In yet another alternative, the first or second bearing part may define the endstop.

According to one embodiment, at least one of said first or second lock elements or said first or second complementary lock elements is shaped as a tooth and its opposite facing lock element or complementary lock element is shaped as a notch configured to receive the tooth.

The first lock element may be shaped as a tooth and the complementary first lock element may be shaped as a notch, or vice versa. Likewise, the second lock element may be shaped as a tooth and the complementary second lock element may be shaped as a notch, or vice versa. The dimensions of the locking segment may be selected according to the particular geometry of the mainframe, hub and bearing unit in order to suitably fill the gap between the complementary first and second lock elements. The dimensions of the teeth and notches may further be selected according to the forces acting on the teeth in order to perform a proper lock between the mainframe and the hub.

The edges of the respective teeth and notches may be optimised to prevent the formation of notch effect in that area. This transition area may form a smooth transition, e.g. a rounded or triangular edge.

According to one embodiment, the at least one locking segment is made of a material with a low e-modulus, such as high alloy steel, high strength aluminium, a plastic material, a fibre reinforced composite material.

The locking segment, the first flange and/or the second flange may be made of a material with a low e-modulus, such as a metal alloy, e.g. high alloy steel, high strength aluminium, a plastic material, a composite material, e.g. fibre reinforced composite, or another suitable material. The high alloy steel may be defined as steel having a total amount of alloy materials of more than 4% to 8% by weight.

As mentioned earlier, an object of the invention is also achieved by a method of operating a locking system of a wind turbine according to claim 12.

This provides a simple and easy method of locking the wind turbine rotor without having to enter the interior of the mainframe structure. The present configuration also provides easy access to the locking segments and, thus, allows for an easy insertion and removal of these locking segments compared to the locking system of DK 178152 B1.

The locking segments are inserted into a gap between a rotating part, e.g. hub, the second flange or the second bearing part, and a stationary part, e.g. the mainframe, the first flange or the first bearing part. The gap enables the rotating parts to follow the rotation of the rotor while allowing for some movement of the respective parts. When fully inserted into this gap, the locking segments provides a suitable lock between the rotating parts, e.g. the hub, and the stationary parts, e.g. the mainframe, and thus locks the rotor in a certain rotational position. This also allows the locking system to take up any slack that may exist in the rotating parts since it is positioned between the hub and the mainframe.

The locking segments are suitably inserted into this gap in an axial direction, or even in a radial direction, depending on the particular configuration of the mainframe and of the hub. Unlike in DK 178152 B1, the gap is located between the exteriors of the mainframe and of the hub and, thus, allows the locking segments to be inserted and removed from the exterior.

The mainframe and hub, e.g. the complementary first and second lock elements thereof, can suitably be aligned after stopping the rotor by operating a separate motor connected to the rotor, e.g. the rotor shaft. Alternatively, the pitching of the wind turbine blades can be used to bring the hub into alignment with the mainframe. During insertion, the conical or tapered profile of the lock elements and/or complementary lock elements can be used to guide the locking segment into position.

In example, a first locking segment may be inserted into the gap once the alignment process is completed and then secured before inserting at least a second locking segment. The at least a second locking segment may then be secured to the mainframe and/or hub. Alternatively, all the locking segments may be inserted before securing them as described below.

According to one embodiment, the method further comprises the step of:
- securing the at least one locking segment to an adjacent part from the exterior of the mainframe using mounting means, where said mounting means hold the at least one locking segment in place relative to the mainframe or hub, and
- optionally removing said at least one locking segment so that the rotor is unlocked and able to rotate again.

The locking segments may be secured to the mainframe and/or hub by using suitable fastening means. The locking segment may be secured to the adjacent mainframe or first flange via one or more fasteners or other suitable fastening means. Alternatively, the locking segment may be secured to the adjacent hub or second flange via one or more fasteners or other suitable fastening means. In yet another alternative, the locking segment may be inserted into the gap until it comes into contact with an endstop. The locking segment may then be secured to the endstop via mounting elements in the locking segment.

In order to unlock the rotor again, the locking segments are simply released and removed from the gap, thus enabling the rotor to rotate again.

The length of each locking segment defines an angular segment along the circumference of the hub. The locking segment may in example, but not limited to, define an angular segment between 8 degrees and 20 degrees. In some situations, it may be desirable to have a locking segment defining an angular segment greater than 20 degrees. This allows the length of each locking segment as well as the number of locking segments inserted into the gap to be adapted to a particular wind turbine.

Since the present locking system is situated on the exterior of the hub and mainframe, the wind turbine can suitable comprise a gearbox unit which is partly or fully arranged inside the mainframe structure. The locking system may also suitably be used in direct drive wind turbines that do have a gearbox unit. The rotor shaft may instead be connected directly to the rotor of the generator.

### Description of the Drawing

The invention is described by example only and with reference to the drawings, wherein:
- Fig. 1: shows an exemplary embodiment of a wind turbine;
- Fig. 2: shows an exemplary embodiment of a locking system arranged between the hub and a mainframe of the nacelle;
- Fig. 3: shows a cross sectional view of a mounting interface between the hub and the mainframe;
- Fig. 4: shows the locking segment of the locking system shown in fig. 2;
- Fig. 5: shows an exemplary embodiment of the locking system with a locking segment in an unlocked position; and

- Fig. 6: shows the locking system of fig. 4 with the locking segment in a locked position.

In the following text, the figures will be described one by one, and the different parts and positions seen in the figures will be numbered with the same numbers in the different figures. Not all parts and positions indicated in a specific figure will necessarily be discussed together with that figure.

### Position number list

1. Wind turbine
2. Tower
3. Nacelle
4. Hub
5. Wind turbine blades
6. Locking system
7. Mainframe
8. Rotor shaft
9. Outer surface
10. First flange
11. Locking segment
12. Complementary first lock elements
13. Outer surface
14. Complementary second lock elements
15. Mounting interface
16. First bearing part
17. Second bearing part
18. Second flange
19. First surface
20. Second surface
21. First lock elements
22. Second lock element
23. First support area
24. Second support area
25. Gap
26. Endstop

### Detailed Description of the Invention

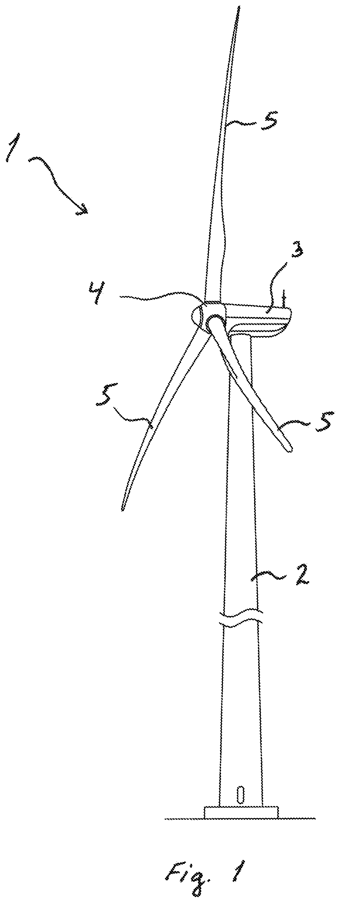

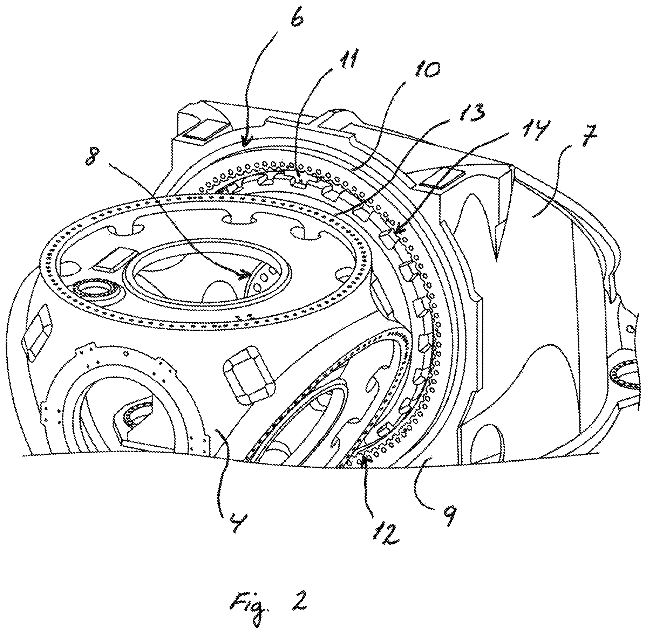

Fig. 1 shows an exemplary embodiment of a wind turbine 1. The wind turbine 1 comprises a wind turbine tower 2 provided on a foundation. A nacelle 3 is arranged on top of the wind turbine tower 2 and configured to yaw relative to the wind turbine tower 2 via a yaw system (not shown). A hub 4 is rotatably arranged relative to the nacelle 3, wherein at least two wind turbine blades 5 are mounted to the hub 4. The wind turbine 1 is here outfitted with three wind turbine blades 5. The rotor, i.e. the hub 4 with wind turbine blades 5, is connected to an electrical generator (not shown) arranged in the nacelle 3 via a rotor shaft (shown in fig. 2) for producing an electrical power output.

Fig. 2 shows an exemplary embodiment of a locking system 6 arranged relative to the hub 5 and a mainframe 7 of the nacelle 3. The covers of the hub 5 and the nacelle 3 are here removed for illustrative purposes.

The mainframe 7 comprises an opening facing the hub 4 in the axial direction, and the hub 4 comprises an opposite facing opening. A rotor shaft 8 is mounted to a mounting flange extending inwards from the hub 4.

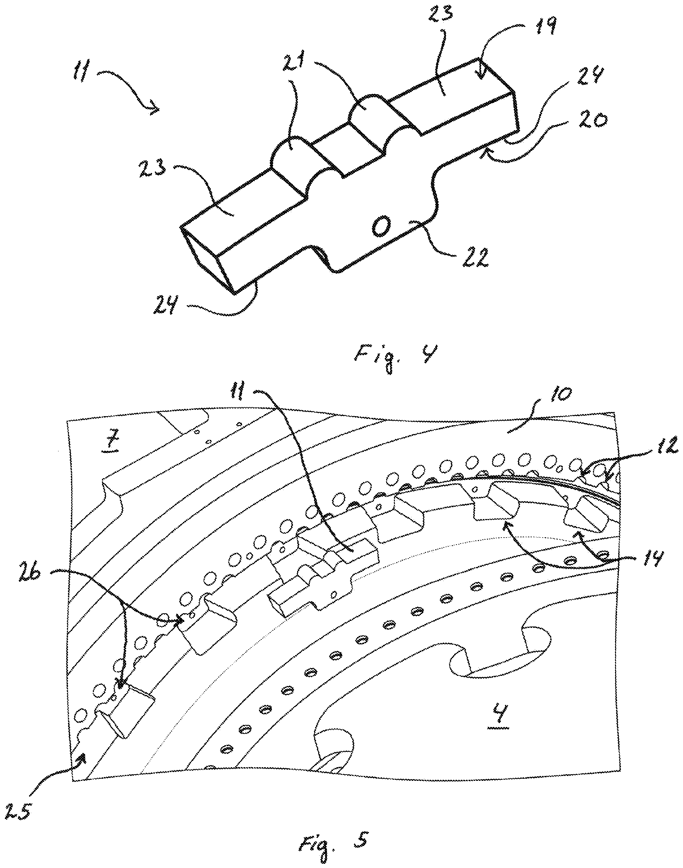

The mainframe 7 has an outer surface 9 facing in the axial direction at which a first flange 10 in the form of an outer ring is arranged. The locking system 6 comprises at least one segment 11 configured to be inserted into a gap (shown in figs. 4 and 5) between the first flange 10 and the hub 4. The locking segment 11 comprises a set of first lock elements (shown in fig. 4) arranged on a surface. The first flange 10 comprises a set of complementary first lock elements 12 facing the hub 4 and configured to engage the first lock elements on the locking segment 11.

The locking segment 11 further comprises a set of second lock elements (shown in fig. 4) arranged on an opposite surface. The hub 4 has an outer surface 13 facing in the radial direction in which a set of complementary second lock elements 14 is arranged.

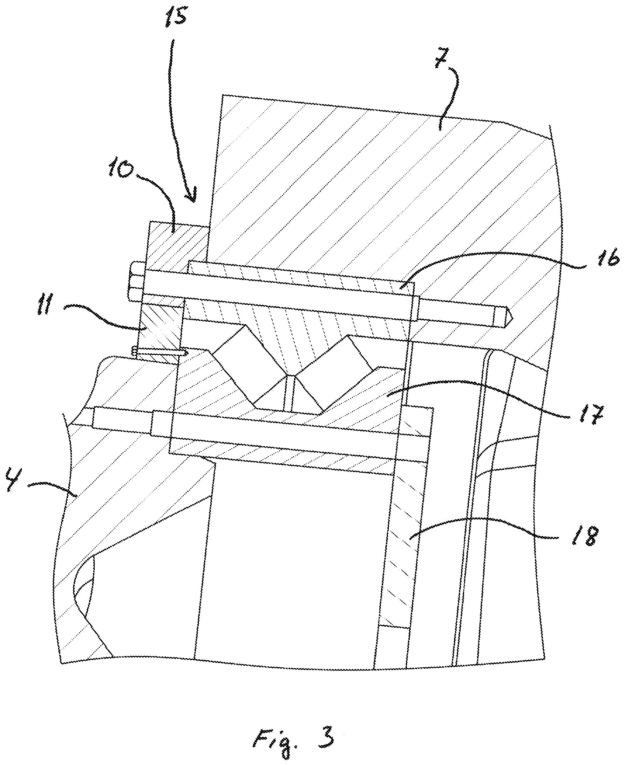

Fig. 3 shows a cross sectional view of a mounting interface 15 between the hub 4 and the mainframe 7. The mounting interface 15 comprises a bearing unit configured to transfer structural loads and aerodynamic loads from the rotor to the mainframe 7 while rotational torque is transferred to the generator via the rotor shaft 8.

The bearing unit comprises a first bearing part 16 connected to the mainframe 7 via fastening elements in the form of bolts. At least the first flange 10 and the first bearing part 16 comprise mounting elements (shown in fig. 4) in the form of mounting holes for receiving the fastening elements as shown in fig. 3.

The bearing unit further comprises a second bearing part 17 arranged relative to the first bearing part 16 via a plurality of rotatable elements, e.g. roller elements. The second bearing part 17 is connected to the hub 4 via other fastening elements in the form of bolts. A second flange 18 in the form of an inner ring is arranged relative to an inner surface of the second bearing part 17 facing in the axial direction. The second flange 18 is configured to add stiffness to the bearing unit. At least the second flange 18 and the second bearing part 17 comprise mounting elements in the form of mounting holes for receiving the other fastening elements as shown in fig. 3.

The first and second bearing parts 16, 17 has an outer surface facing in the opposite axial direction where at least the second bearing part 17 acts as an endstop (shown in fig. 5) for the locking segment 11 when fully inserted into the gap (shown in fig. 5). The locking segment 11 further comprises a mounting element in the form of a mounting hole for receiving the above-mentioned further fastening element. The fastening element and mounting hole act as fixation elements for securing the locking segment 11 relative to the mainframe 7 and the hub 4 while the rotor is locked in a rotational position.

Fig. 4 shows the locking segment 11 of the locking system 6 shown in fig. 2. The locking segment 11 has a first surface 19 in the form of an end surface and an opposite facing second surface 20 also in the form of an end surface. Two first lock elements 21 are arranged on the first surface 19 and a second lock element 22 is arranged on the second surface 20. The second lock element 22 has a mounting hole for receiving the fastening element shown in fig. 3.

At both ends of the locking segment 11 there is a first support area 23 located between a peripheral edge and the outermost first lock element 21. Further, a space is located between the two successive first lock elements 21. Likewise, there is a second support area 24 located between the peripheral edge and the second lock element 22 at both ends.

Each of the two first lock elements 21 has a length measured in the rotational direction of the rotor which substantially corresponds to the length of the space between the two successive first lock elements 21. The length of each first support area 23 substantially corresponds to the pitch of the first lock elements 21. The second lock element 22 has a length which substantially corresponds to the sum of the pitch of the first lock elements 21 and the length of one first lock element 21 as indicated in fig. 4. The length of each second support area 24 substantially corresponds to the length of the first support areas 23. This reduces the moment arm and, thus, allows for an optimal transfer of forces between the mainframe 7 and the hub 4. This also prevents the locking segment from tilting when the rotor is locked and, thus, allows for a more evenly distribution of forces between the two first lock elements.

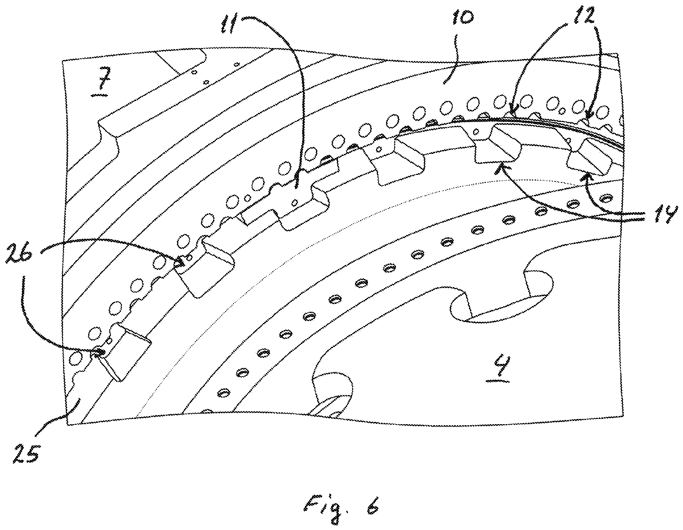

Fig. 5 shows an exemplary embodiment of the locking system 6 with the locking segment 11 in an unlocked position while fig. 6 shows the locking system 6 with the locking segment 11 in a locked position. At least the complementary second lock elements 14 have a trapezoid cross sectional profile where the length between the opposite facing side surfaces tapers from one end towards the other end as shown in figs. 5 and 6.

The rotation of the rotor is initially slowed down, e.g. by pitching the wind turbine blades 5 out of the wind or via a braking system, and the locking segment 11 is positioned in the unlocked position as shown in fig. 5. After stopping the rotor, the locking segment 11 is inserted in the gap 25 between the mainframe 7 and the hub 4 in the axial direction. The locking segment 11 is then guided into position in the gap 25 via the complementary second lock elements 14. The first and second lock elements 21, 22 are thus brought into contact with the complementary first and second lock elements 12, 14. The locking segment 11 is further inserted until the first and second lock elements 21, 22 are fully engaging the complementary first and second lock elements 12, 14 as shown in fig. 6 and the locking segment 11 contacts the endstop 26. The locking segment 11 is then secured to the endstop 26 as shown in fig. 3 and thereby locking the rotor in a selected rotational position.

When the rotor is unlocked, the locking segment 11 is simply released and removed in a reverse order. The rotation of the rotor can be initiated again, e.g. by pitching the wind turbine blades 5.

## Claims

1. A wind turbine (1) comprising:
- a rotor arranged relative to a nacelle (3), the rotor comprises at least two wind turbine blades (5) mounted to a rotatable hub (4), the hub (4) is configured to be mounted to a rotor shaft (8),
- the nacelle (3) being arranged on top of a wind turbine tower (2), the nacelle (3) comprising a mainframe (7) configured to be rotatably coupled to the hub (4) at a mounting interface (15),
- the mounting interface (15) comprises a first bearing part (16) and a second bearing part (17) configured to rotate relative to the first bearing part (16), wherein one of the first and second bearing parts (16, 17) is connected to the hub (4) and the other of the first and second bearing parts (16, 17) is connected to the mainframe (7) for transferring loads from the rotor to the mainframe (7),
- a locking system (6) comprising at least one locking segment (11), the at least one locking segment (11) having a length in a rotational direction, a height in a radial direction, and a width in an axial direction, wherein the at least one locking segment (11) comprises at least one first lock element (21) arranged on a first surface (19) and at least one second lock element (22) arranged on an opposite facing second surface (20), each of said first and second lock elements (21, 22) has a length, a height and a width, wherein each first lock element (21) is configured to engage a complementary first lock element (12) on the mainframe (7), and each second lock element (22) is configured to engage a complementary second lock element (14) on the hub (4), **characterised in that,** at least a first support area (23) is arranged on the first surface (19), the first support area (23) being located at a peripheral edge of the at least one locking segment, wherein the first support area (23) has a length which corresponds to at least twice the length of the at least one first lock element (21).

2. A wind turbine (1) according to claim 1, **characterised in that,** at least a second support area (24) is arranged on the second surface (20), the second support area (24) being located at a peripheral edge of the at least one locking segment (21), wherein the second support area (24) has a length which at least corresponds to the length of said first support area (23).

3. A wind turbine (1) according to claim 1 or 2, **characterised in that,** at least one of the first and second surfaces (19, 20) has two first or second support areas (23, 24) arranged at opposite facing peripheral edges, wherein said first or second lock elements (21, 22) are located between said two first or second support areas (23, 24).

4. A wind turbine (1) according to any one of claims 1 to 3, **characterised in that,** the at least one second lock element (22) has at least a length that is greater than the at least one first lock element (21).

5. A wind turbine (1) according to any one of claims 1 to 4, **characterised in that,** the mainframe (7) or the mounting interface (15) comprises a first outer surface (9) axially facing the hub (4), where a first flange (10) is connected to the first outer surface (9), and said complementary first lock elements (12) are arranged on an inner surface of the first flange (10).

6. A wind turbine (1) according to any one of claims 1 to 5, **characterised in that,** the hub (4) comprises a second outer surface (13), where a second flange (18) is connected to the second outer surface (13), where said complementary second lock elements (14) are integrated in an outer surface (9) of the second flange (18).

7. A wind turbine (1) according to any one of claims 1 to 5, **characterised in that,** at least the first complementary lock elements (12) are integrated into a first outer surface (9) on the mainframe (7) or the second complementary lock elements (14) are integrated into a second outer surface (13) on the hub (4).

8. A wind turbine (1) according to any one of claims 1 to 7, **characterised in that,** at least one of said first or second lock elements (21, 22) or said first or second complementary lock elements (12, 14) has a trapeziod shape in at least the width direction.

9. A wind turbine (1) according to any one of claims 1 to 8, **characterised in that,** the at least one locking segment (11) has at least one fixation element configured to secure the at least one locking segment (11) to an endstop (26).

10. A wind turbine (1) according to any one of claims 1 to 9, **characterised in that,** the at least one locking segment (11) is made of a material with a low e-modulus, such as high alloy steel, high strength aluminium, a plastic material, or a fibre reinforced composite material.

11. A wind turbine (1) according to any one of claims 1 to 10, **characterised in that,** at least one of said first or second lock elements (21, 22) or said first or second complementary lock elements (12, 14) is shaped as a tooth and its opposite facing lock element (21, 22) or complementary lock element (21, 22) is shaped as a notch configured to receive the tooth.

12. A method of operating a locking system (6) of a wind turbine (1) according to any one of claims 1 to 11, wherein the method comprises the steps of:
- stopping the rotor,
- aligning the complementary first lock elements (12) in relation to the complementary second lock elements (14),
- inserting the at least one locking segment (11) in an axial direction so that the at least one first lock element (21) and the at least one second lock element (22) engage the complementary first and second lock elements (12, 14), wherein
- the at least one locking segment is inserted from an exterior of the mainframe (7), where the at least one locking segment is moved in an axial direction from a position near the hub (4) and into its final position at which the first and second lock elements (21, 22) fully engage the complementary first and second lock elements (12, 14) so that the rotor is locked in a rotational position.

13. A method according to claim 12, wherein the method further comprises the steps of:
- securing the at least one locking segment to an adjacent part from the exterior of the mainframe (7) using mounting means, where said mounting means hold the at least one locking segment in place relative to the mainframe (7) or hub (4), and
- optionally, removing said at least one locking segment (11) so that the rotor is unlocked and able to rotate again.

## Patentansprüche

1. Windturbine (1), umfassend:
- einen Rotor, der relativ zu einer Gondel (3) angeordnet ist, wobei der Rotor mindestens zwei Windturbinenblätter (5) umfasst, die an einer drehbaren Nabe (4) montiert sind, wobei die Nabe (4) konfiguriert ist, um an einer Rotorwelle (8) montiert zu werden,
- wobei die Gondel (3) oben auf einem Windturbinenturm (2) angeordnet ist, wobei die Gondel (3) einen Hauptrahmen (7) umfasst, der konfiguriert ist, um an einer Montageschnittstelle (15) drehbar mit der Nabe (4) gekoppelt zu werden,
- wobei die Montageschnittstelle (15) ein erstes Lagerteil (16) und ein zweites Lagerteil (17) umfasst, die konfiguriert sind, um sich relativ zu dem ersten Lagerteil (16) zu drehen, wobei eines der ersten und des zweiten Lagerteils (16, 17) mit der Nabe (4) verbunden ist und das andere der ersten und des zweiten Lagerteils (16, 17) mit dem Hauptrahmen (7) verbunden ist, um Lasten von dem Rotor auf den Hauptrahmen (7) zu übertragen,
- ein Verriegelungssystem (6), das mindestens ein Verriegelungssegment (11) umfasst, wobei das mindestens eine Verriegelungssegment (11) eine Länge in einer Drehrichtung, eine Höhe in einer Radialrichtung und eine Breite in einer Axialrichtung aufweist, wobei das mindestens ein Verriegelungssegment (11) mindestens ein erstes Verriegelungselement (21) umfasst, das auf einer ersten Oberfläche (19) angeordnet ist, und mindestens ein zweites Verriegelungselement (22) umfasst, das auf einer gegenüberliegenden zweiten Oberfläche (20) angeordnet ist, wobei jedes des ersten und des zweiten Verriegelungselements (21, 22) eine Länge, eine Höhe und eine Breite aufweist, wobei jedes erste Verriegelungselement (21) konfiguriert ist, um mit einem komplementären ersten Verriegelungselement (12) an dem Hauptrahmen (7) in Eingriff zu gelangen, und jedes zweite Verriegelungselement (22) konfiguriert ist, um mit einem komplementären zweiten Verriegelungselement (14) an der Nabe (4) in Eingriff zu gelangen, **dadurch gekennzeichnet, dass** mindestens ein erster Stützbereich (23) auf der ersten Oberfläche (19) angeordnet ist, wobei sich der erste Stützbereich (23) an einer Umfangskante des mindestens einen Verriegelungssegments befindet, wobei der erste Stützbereich (23) eine Länge aufweist, die mindestens der doppelten Länge des mindestens einen ersten Verriegelungselements (21) entspricht.

2. Windturbine (1) nach Anspruch 1, **dadurch gekennzeichnet, dass** mindestens ein zweiter Stützbereich (24) auf der zweiten Oberfläche (20) angeordnet ist, wobei sich der zweite Stützbereich (24) an einer Umfangskante des mindestens einen Verriegelungssegments (21) befindet, wobei der zweite Stützbereich (24) eine Länge aufweist, die mindestens der Länge des ersten Stützbereichs (23) entspricht.

3. Windturbine (1) nach Anspruch 1 oder 2, **dadurch gekennzeichnet, dass**mindestens eine der ersten und der zweiten Oberfläche (19, 20) zwei erste oder zweite Stützbereiche (23, 24) aufweist, die gegenüberliegenden Umfangskanten angeordnet sind, wobei sich das erste oder das zweite Verriegelungselement (21, 22) zwischen den zwei ersten oder dem zweiten Stützbereich (23, 24) angeordnet sind.

4. Windturbine (1) nach einem der Ansprüche 1 bis 3, **dadurch gekennzeichnet, dass** das mindestens eine zweite Verriegelungselement (22) mindestens eine Länge aufweist, die größer als die des mindestens einen ersten Verriegelungselements (21) ist.

5. Windturbine (1) nach einem der Ansprüche 1 bis 4, **dadurch gekennzeichnet, dass** der Hauptrahmen (7) oder die Montageschnittstelle (15) eine erste Außenoberfläche (9) umfasst, die axial der Nabe (4) zugewandt ist, wobei ein erster Flansch (10) mit der ersten Außenoberfläche (9) verbunden ist und die komplementären ersten Verriegelungselemente (12) an einer Innenoberfläche des ersten Flansches (10) angeordnet sind.

6. Windturbine (1) nach einem der Ansprüche 1 bis 5, **dadurch gekennzeichnet, dass** die Nabe (4) eine zweite Außenoberfläche (13) aufweist, wobei ein zweiter Flansch (18) mit der zweiten Außenoberfläche (13) verbunden ist, wobei die komplementären zweiten Verriegelungselemente (14) in eine Außenoberfläche (9) des zweiten Flansches (18) integriert sind.

7. Windturbine (1) nach einem der Ansprüche 1 bis 5, **dadurch gekennzeichnet, dass** mindestens die ersten komplementären Verriegelungselemente (12) in eine erste Außenoberfläche (9) an dem Hauptrahmen (7) integriert sind oder die zweiten komplementären Verriegelungselemente (14) in eine zweite Außenoberfläche (13) an der Nabe (4) integriert sind.

8. Windturbine (1) nach einem der Ansprüche 1 bis 7, **dadurch gekennzeichnet, dass** mindestens eines des ersten oder des zweiten Verriegelungselement (21, 22) oder des ersten oder des zweiten komplementären Verriegelungselements (12, 14) mindestens in der Breitenrichtung eine Trapezform aufweist.

9. Windturbine (1) nach einem der Ansprüche 1 bis 8, **dadurch gekennzeichnet, dass** das mindestens eine Verriegelungssegment (11) mindestens ein Befestigungselement aufweist, das konfiguriert ist, um das mindestens eine Verriegelungssegment (11) an einem Endanschlag (26) zu befestigen.

10. Windturbine (1) nach einem der Ansprüche 1 bis 9, **dadurch gekennzeichnet, dass** das mindestens eine Verriegelungssegment (11) aus einem Material mit niedrigem E-Modul wie z. B. aus hochlegiertem Stahl, hochfestem Aluminium, einem Kunststoffmaterial oder einem faserverstärkten Verbundmaterial hergestellt ist.

11. Windturbine (1) nach einem der Ansprüche 1 bis 10, **dadurch gekennzeichnet, dass** mindestens eines des ersten oder des zweiten Verriegelungselement (21, 22) oder des ersten oder des zweiten komplementären Verriegelungselement (12, 14) als Zahn geformt ist und sein gegenüberliegendes Verriegelungselement (21, 22) oder komplementäres Verriegelungselement (21, 22) als zum Aufnehmen des Zahns konfigurierte Kerbe geformt ist.

12. Verfahren zum Betreiben eines Verriegelungssystems (6) einer Windturbine (1) nach einem der Ansprüche 1 bis 11, wobei das Verfahren die folgenden Schritte umfasst:
- Anhalten des Rotors,
- Ausrichten der komplementären ersten Verriegelungselemente (12) in Bezug auf die komplementären zweiten Verriegelungselemente (14),
- Einsetzen des mindestens einen Verriegelungssegments (11) in einer Axialrichtung, sodass das mindestens eine erste Verriegelungselement (21) und das mindestens eine zweite Verriegelungselement (22) mit den komplementären ersten und zweiten Verriegelungselementen (12, 14) in Eingriff gelangen, wobei
- das mindestens eine Verriegelungssegment von einer Außenseite des Hauptrahmens (7) eingeführt wird, wobei das mindestens eine Verriegelungssegment in einer Axialrichtung von einer Position nahe der Nabe (4) und in seine endgültige Position bewegt wird, in der das erste und das zweite Verriegelungselement (21, 22) vollständig mit dem komplementären ersten und zweiten Verriegelungselement (12, 14) in Eingriff gelangen, sodass der Rotor in einer Drehposition verriegelt ist.

13. Verfahren nach Anspruch 12, wobei das Verfahren ferner die folgenden Schritte umfasst:
- Befestigen des mindestens einen Verriegelungssegments an einem angrenzenden Teil von der Außenseite des Hauptrahmens (7) unter Verwendung von Befestigungsmitteln, wobei die Befestigungsmittel das mindestens eine Verriegelungssegment relativ zu dem Hauptrahmen (7) oder der Nabe (4) an Ort und Stelle halten, und
- optional Entfernen des mindestens einen Verriegelungssegments (11), sodass der Rotor entriegelt ist und sich wieder drehen kann.

## Revendications

1. Éolienne (1) comprenant :
- un rotor agencé par rapport à une nacelle (3), le rotor comprend au moins deux pales d'éolienne (5) montées sur un moyeu (4) rotatif, le moyeu (4) est conçu pour être monté sur un arbre de rotor (8),
- la nacelle (3) étant agencée au sommet d'une tour d'éolienne (2), la nacelle (3) comprenant une structure principale (7) conçue pour être couplée en rotation au moyeu (4) au niveau d'une interface de montage (15),
- l'interface de montage (15) comprend une première partie de palier (16) et une seconde partie de palier (17) conçue pour tourner par rapport à la première partie de palier (16), dans laquelle l'une des première et seconde parties de palier (16, 17) est reliée au moyeu (4) et l'autre des première et seconde parties de palier (16, 17) est reliée à la structure principale (7) pour transférer des charges depuis le rotor vers la structure principale (7),
- un système de verrouillage (6) comprenant au moins un segment de verrouillage (11), l'au moins un segment de verrouillage (11) ayant une longueur dans une direction de rotation, une hauteur dans une direction radiale et une largeur dans une direction axiale, dans laquelle l'au moins un segment de verrouillage (11) comprend au moins un premier élément de verrouillage (21) agencé sur une première surface (19) et au moins un second élément de verrouillage (22) agencé sur une seconde surface (20) orientée de manière opposée, chacun desdits premiers et seconds éléments de verrouillage (21, 22) a une longueur, une hauteur et une largeur, dans laquelle chaque premier élément de verrouillage (21) est conçu pour venir en prise avec un premier élément de verrouillage complémentaire (12) sur la structure principale (7), et chaque second élément de verrouillage (22) est conçu pour venir en prise avec un second élément de verrouillage complémentaire (14) sur le moyeu (4), **caractérisée en ce que,** au moins une première zone de support (23) est agencée sur la première surface (19), la première zone de support (23) étant située au niveau d'un bord périphérique de l'au moins un segment de verrouillage, dans laquelle la première zone de support (23) a une longueur qui correspond à au moins deux fois la longueur de l'au moins un premier élément de verrouillage (21).

2. Éolienne (1) selon la revendication 1, **caractérisée en ce que,** au moins une seconde zone de support (24) est agencée sur la seconde surface (20), la seconde zone de support (24) étant située au niveau d'un bord périphérique de l'au moins un segment de verrouillage (21), dans laquelle la seconde zone de support (24) a une longueur qui correspond au moins à la longueur de ladite première zone de support (23).

3. Éolienne (1) selon la revendication 1 ou 2, **caractérisée en ce que,** au moins l'une des première et seconde surfaces (19, 20) a deux premières ou secondes zones de support (23, 24) agencées au niveau de bords périphériques orientés de manière opposée, dans laquelle lesdits premiers ou seconds éléments de verrouillage (21, 22) sont situés entre lesdites deux premières ou secondes zones de support (23, 24).

4. Éolienne (1) selon l'une quelconque des revendications 1 à 3, **caractérisée en ce que,** l'au moins un second élément de verrouillage (22) a au moins une longueur qui est supérieure à l'au moins un premier élément de verrouillage (21).

5. Éolienne (1) selon l'une quelconque des revendications 1 à 4, **caractérisée en ce que,** la structure principale (7) ou l'interface de montage (15) comprend une première surface extérieure (9) orientée axialement vers le moyeu (4), où une première bride (10) est reliée à la première surface extérieure (9), et lesdits premiers éléments de verrouillage complémentaires (12) sont agencés sur une surface intérieure de la première bride (10).

6. Éolienne (1) selon l'une quelconque des revendications 1 à 5, **caractérisée en ce que,** le moyeu (4) comprend une seconde surface extérieure (13), où une seconde bride (18) est reliée à la seconde surface extérieure (13), où lesdits seconds éléments de verrouillage complémentaires (14) sont intégrés dans une surface extérieure (9) de la seconde bride (18).

7. Éolienne (1) selon l'une quelconque des revendications 1 à 5, **caractérisée en ce que,** au moins les premiers éléments de verrouillage complémentaires (12) sont intégrés dans une première surface extérieure (9) sur la structure principale (7) ou les seconds éléments de verrouillage complémentaires (14) sont intégrés dans une seconde surface extérieure (13) sur le moyeu (4).

8. Éolienne (1) selon l'une quelconque des revendications 1 à 7, **caractérisée en ce que,** au moins l'un desdits premiers ou seconds éléments de verrouillage (21, 22) ou desdits premiers ou seconds éléments de verrouillage complémentaires (12, 14) a une forme trapézoïdale dans au moins la direction de la largeur.

9. Éolienne (1) selon l'une quelconque des revendications 1 à 8, **caractérisée en ce que,** l'au moins un segment de verrouillage (11) a au moins un élément de fixation conçu pour fixer l'au moins un segment de verrouillage (11) à une butée d'extrémité (26) .

10. Éolienne (1) selon l'une quelconque des revendications 1 à 9, **caractérisée en ce que,** l'au moins un segment de verrouillage (11) est constitué d'un matériau à faible module d'élasticité, tel que de l'acier fortement allié, de l'aluminium à haute résistance, une matière plastique ou un matériau composite renforcé de fibres.

11. Éolienne (1) selon l'une quelconque des revendications 1 à 10, **caractérisée en ce que,** au moins l'un desdits premiers ou seconds éléments de verrouillage (21, 22) ou desdits premiers ou seconds éléments de verrouillage complémentaires (12, 14) se présente sous la forme d'une dent et son élément de verrouillage (21, 22) orienté de manière opposée ou son élément de verrouillage complémentaire (21, 22) se présente sous la forme d'une encoche conçue pour recevoir la dent.

12. Procédé de fonctionnement d'un système de verrouillage (6) d'une éolienne (1) selon l'une quelconque des revendications 1 à 11, dans lequel le procédé comprend les étapes :
- d'arrêt du rotor,
- d'alignement des premiers éléments de verrouillage complémentaires (12) par rapport aux seconds éléments de verrouillage complémentaires (14),
- d'insertion de l'au moins un segment de verrouillage (11) dans une direction axiale de sorte que l'au moins un premier élément de verrouillage (21) et l'au moins un second élément de verrouillage (22) viennent en prise avec les premiers et seconds éléments de verrouillage complémentaires (12, 14), dans lequel
- l'au moins un segment de verrouillage est inséré depuis l'extérieur de la structure principale (7), où l'au moins un segment de verrouillage est déplacé dans une direction axiale depuis une position proche du moyeu (4) et dans sa position finale au niveau de laquelle les premiers et seconds éléments de verrouillage (21, 22) viennent en prise complètement avec les premiers et seconds éléments de verrouillage complémentaires (12, 14) de sorte que le rotor est verrouillé dans une position de rotation.

13. Procédé selon la revendication 12, dans lequel le procédé comprend en outre les étapes :
- de fixation de l'au moins un segment de verrouillage à une partie adjacente depuis l'extérieur de la structure principale (7) à l'aide de moyens de montage, où lesdits moyens de montage maintiennent l'au moins un segment de verrouillage en place par rapport à la structure principale (7) ou au moyeu (4), et
- éventuellement, de retrait dudit au moins un segment de verrouillage (11) de sorte que le rotor est déverrouillé et peut à nouveau tourner.
